(19) Europäisches Patentamt
European Patent Office
Office européen des brevets

(11) **EP 0 660 600 B1**

(12) **FASCICULE DE BREVET EUROPEEN**

(45) Date de publication et mention
de la délivrance du brevet:
**03.03.1999 Bulletin 1999/09**

(51) Int Cl.6: **H04N 5/33**, H04N 3/15

(21) Numéro de dépôt: **94402946.1**

(22) Date de dépôt: **20.12.1994**

(54) **Sommateur de tensions, et matrice de sommateurs, pour appareil d'imagerie thermique**

Spannungsaddierer und Addierer-Matrize für ein Wärmebildgerät

Voltage adder and adder-matrix for a thermal imager

(84) Etats contractants désignés:
**DE FR GB IT NL**

(30) Priorité: **23.12.1993 FR 9315547**

(43) Date de publication de la demande:
**28.06.1995 Bulletin 1995/26**

(73) Titulaire: **THOMSON-CSF**
**75008 Paris (FR)**

(72) Inventeur: **Audier, Marcel-Francis**
**F-92402 Courbevoie Cédex (FR)**

(74) Mandataire: **Lincot, Georges et al**
**Thomson-CSF Propriété Intellectuelle,**
**13, Avenue du Président Salvador Allende**
**94117 Arcueil Cédex (FR)**

(56) Documents cités:
**EP-A- 0 137 704**     **EP-A- 0 207 826**
**EP-A- 0 230 809**     **EP-A- 0 435 773**
**WO-A-87/07769**

## Description

La présente invention concerne un sommateur de tensions, hautement intégrable, destiné aux caméras et appareils de prises de vues thermiques, dans lesquelles les images sont analysées par balayage de type télévision. L'invention s'applique également à l'imagerie photonique, moyennant l'adaptation des éléments détecteurs.

Dans le but d'améliorer la sensibilité des systèmes d'imagerie balayée, diverses solutions ont été imaginées afin d 'augmenter les temps d'intégration sans dégrader la résolution spatiale. L'intégration retardée, connue sous le terme anglais "TDI" ou "Time Delay and Integration", est une de ces solutions. Très performante, elle est largement utilisée pour les applications d'imagerie militaire.

L'invention décrite permet de réaliser une matrice de sommateurs de tensions, à accès aléatoire en entrée et en sortie, qui, associée à une matrice d'éléments détecteurs et une logique de commande appropriée, permet la conception de la fonction "TDI" pour des plans focaux hautement intégré, performants et compatibles de divers standards vidéos.

En imagerie thermique, on appelle "plan focal" l'ensemble, placé dans un cryostat, des circuits intégrés de détecteurs de type HgCdTe par exemple et des circuits intégrés d'interface qui permettent de sortir les signaux électriques de l'enceinte du cryostat. Précisément parce que la plaquette des détecteurs est située au plan focal de l'optique de prise de vue. Les plans focaux doivent être le plus intégré possible, pour correspondre à des images ayant le plus grand nombre possible de pixels, mais les données électriques acquises en parallèle doivent être transmises en série, simplement en raison du nombre limité de sorties à travers les parois du cryostat.

L'augmentation des performances des imageurs thermiques et la nécessité d'en réduire le coût impliquent d'augmenter le nombre de pixels analysés simultanément, tout en limitant la taille des plans focaux, d'accroître le conditionnement de signal in situ et de simplifier l'électronique hors plan focal.

L'intégration retardée, initialement réalisée hors plan focal, est aujourd'hui fréquemment intégrée grâce à l'utilisation des dispositifs à transfert de charges tels que CCD ou BBD.

Poussées par la nécessité de réaliser à moindre coût des plans focaux à grand nombre d'éléments de détection intégrant de plus en plus de fonctions de traitement de signal et/ou de pilotage, de nouvelles architectures, de type multiplexeurs, réalisées avec des technologies CMOS sont récemment apparues.

La plupart de ces nouveaux multiplexeurs réalisent la fonction d'intégration retardée à l'aide de circuits à transfert de charges de type BBD (Bucket Brigade Device). Parmi les inconvénients de cette approche, les plus graves sont :

- la perte d'une voie de détection, due au mauvais fonctionnement d'une cellule de sommation, suite à une dégradation ou une destruction parce que les cellules BBD ou CCD sont en série,
- diverses sources de bruit, affectant le transfert de charges d'une cellule à la suivante, engendrent une corrélation entre les fluctuations de bruit de signaux successifs,
- un effet d'éblouissement peut apparaître lorsque les charges transférées dépassent un seuil critique.

Jusqu'à présent, on considérait que la sommation, sans altération de l'information, de deux tensions est difficilement réalisable à l'aide de circuits suffisamment petits, pour être compatibles avec les grandes densités d'intégration requises par les plans focaux de nouvelles générations. C'est pourquoi la fonction d'intégration retardée TDI est généralement basée sur la sommation de charges.

La solution proposée par l'invention consiste à associer à une mosaïque de circuits d'injection classique, de type injection directe, semi-directe ou indirecte, réalisant la conversion charge-tension, une mosaïque de sommateurs de tensions indépendants pouvant être accédés aléatoirement tant en écriture qu'en lecture. Grâce à son association avec une logique de gestion appropriée, chaque sommateur de cette mosaïque peut-être dédié au traitement de signaux détecteurs engendrés par l'analyse d'un même point de la scène. L'indépendance des sommateurs permet de s'affranchir des risques d'éblouissement et d'éviter qu'un défaut de fonctionnement d'une cellule n'entraîne la perte d'une voie de détection. Chaque sommateur est constitué par un transistor à effet de champ ou MOS monté en grille commune et connecté par sa source à une première capacité et par son drain à une seconde capacité. La première capacité reçoit une marche de tension négative commandée par le circuit d'injection. La seconde capacité est chargée par une source de référence. Lorsque le transistor est conducteur, il y a transfert de charges entre la seconde et la première capacités : en fin de transfert, la tension de la capacité de drain à diminué.

De façon plus précise, l'invention concerne un sommateur de tensions, tel que défini dans les revendications 1 à 4.

Selon un autre aspect, l'invention concerne également une matrice de sommateurs de tensions, telle que définie dans la revendication 5.

L'invention sera mieux comprise par la description suivante d'un exemple de sommateur de tension, en liaison avec les figures jointes en annexe, toutes relatives à l'invention qui représentent :

- figure 1 : Schéma d'association des circuits d'injection et des sommateurs de tensions, dans un plan focal d'appareil d'imagerie thermique,
- figure 2 : Schéma du mode de fonctionnement du transistor MOS d'un sommateur,

- figure 3 : Schéma électrique d'un sommateur de tensions.

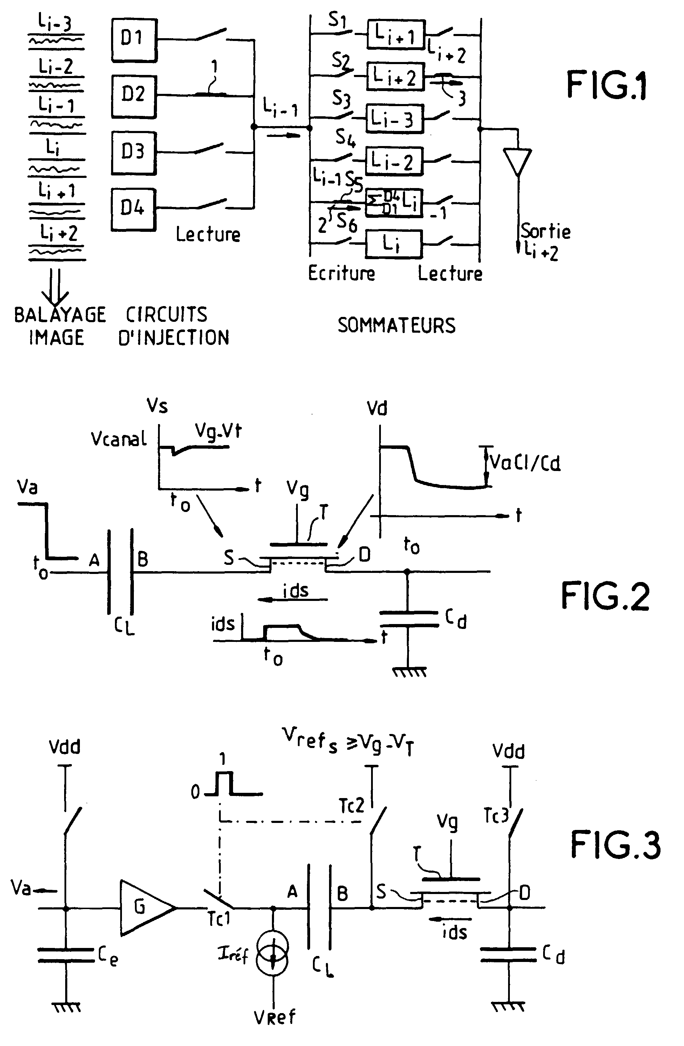

La figure 1 a pour objet principal de rappeler le schéma d'association des circuits intégrés dans un plan focal, placé à l'intérieur d'un cryostat de caméra thermique. L'image thermique, formée de lignes Li, est balayée devant une mosaïque de circuits d'injection $D_1$ à $D_4$, connus, qui transforment les charges électriques, provenant de la lecture de l'image, en tension. Dans le seul but de simplifier la figure, celle-ci est limitée à quelques lignes $L_{i-3}$ à $L_{i+2}$ et à quelques circuits d'injection $D_1$ à $D_4$. La mosaïque des circuits d'injection est connectée, par l'intermédiaire d'un multiplexeur symbolisé par des interrupteurs, à une mosaïque de sommateurs tels que $S_1$ à $S_6$.

La logique de gestion des interrupteurs permet d'accéder de façon aléatoire,tant en lecture qu'en écriture, aux circuits d'injection et aux sommateurs, de sorte que chaque sommateur de la matrice peut être affecté au traitement des signaux engendrés par un même point de l'image, ce qui permet d'additionner les charges correspondantes et donc finalement les tensions. A titre d'exemple non limitatif de l'invention, la ligne $L_{i-1}$ défile devant les circuits d'injection, et elle a communiqué une certaine charge au circuit $D_2$. Par l'intermédiaire des interrupteurs 1 et 2, fermés, la tension résultante est transférée au sommateur $S_5$ qui intègre tous les signaux provenant de $L_{i-1}$ depuis $D_1$ jusque $D_4$. De façon plus générale, un sommateur donné, dans la mosaïque des sommateurs, intègre les signaux d'un seul point de l'image qui balaye les circuits d'injection, ce qui assure l'intégration retardée. Simultanément à l'écriture de $L_{i-1}$ dans $S_5$, le système lit un autre sommateur, par exemple $S_2$, et en extrait $L_{i+2}$ au moyen de l'interrupteur 3. L'ordre dans la gestion des lectures et des écritures dépend de l'organisation de l'image, ou de la norme adoptée.

Illustré en figure 2, le principe de réalisation d'un sommateur repose sur les propriétés du transistor MOS monté en grille commune, caractérisé par une très faible impédance d'entrée, un gain en courant unité et une impédance de sortie élevée. Un tel transistor T est usuellement utilisé pour réaliser l'injection des charges délivrées par un élément détecteur dans une structure d'intégration capacitive réalisée sur silicium.

Pour le sommateur de tension proposé, la source de courant du transistor est réalisée par une capacité de liaison $C_l$ à armatures flottantes dont l'une connectée à la source du transistor T, et repérée B , est préchargée à la tension de canal $V_c$ du dit transistor et l'autre, repérée A, reçoit une marche de tension négative $V_a$, d'amplitude égale à la tension résiduelle en fin de période d'intégration, provenant du circuit d'injection qui est connecté à l'entrée de ce sommateur. Il en résulte un transfert de charges entre l'armature B connectée à la source du transistor T, grille commune, et la structure d'intégration capacitive $C_d$ connectée à son drain et préchargée à une valeur fixe. En fin de transfert, la tension résiduelle $V_d$ de la capacité de drain $C_d$ a diminué, proportionnellement au rapport des capacités de liaison et de drain, de la marche de tension appliquée en entrée : $V_a Cl/Cd$.

Sur la figure 2, les diagrammes montrent l'évolution des tensions et des courants lorsqu'à l'instant $T_o$ est appliquée la marche de tension négative provenant d'un circuit d'injection. Le schéma électrique plus détaillé d'un sommateur est donné en figure 3. Il comprend essentiellement :

- En entrée, couplé au détecteur par l'intermédiaire des circuits d'injection, un circuit intégrateur $C_e$ faisant la conversion charge-tension et un étage de lecture adressable du type source-suiveuse, formé par l'amplificateur G.
- Une source de courant $V_{réf}$ chargeant l'étage suiveur du circuit intégrateur. Cette source de courant peut être formée par un transistor MOSFET dont la grille est polarisée par une tension maintenue constante.
- Un sommateur à capacités commutées comprenant :

  . un transistor MOS monté en grille commune T
  . une capacité à armatures libres $C_l$
  . une capacité MOS $C_d$
  . trois commutateurs MOS $T_{c1}$, $T_{c2}$, et $T_{c3}$.

L'assemblage des composants du sommateur à capacités commutées se fait conformément à la description faite pour la figure 2.

Parmi les trois commutateurs MOS :

- $T_{c1}$ correspond à l'un des interrupteurs S de la figure 1 et permet l'écriture d'un signal dans le sommateur,
- $T_{c2}$ est connecté entre la source S du transistor T et une source de tension $V_{refS}$.
- $T_{c3}$ est connecté entre le drain D du transistor T et une source de tension $V_{dd}$.

$T_{c1}$ et $T_{c2}$ sont commandés simultanément, ou avec un léger retard de $T_{c1}$ sur $T_{c2}$.

Préalablement à la première sommation, le circuit est initialisé en préchargeant la capacité $C_d$ à la tension $V_{dd}$ par la fermeture de l'interrupteur $T_{c3}$. La capacité étant préchargée, l'interrupteur $T_{c3}$ est à nouveau ouvert.

Chaque cycle de sommation se déroule en deux phases .

Au cours de la première phase, les deux interrupteurs $T_{c1}$ et $T_{c2}$ sont fermés ($\phi = 1$). La sortie du circuit d'entrée sélectionné par l'interrupteur $T_{c1}$ est reliée à l'armature A de la capacité à armatures flottantes ou capacité de liaison $C_l$. Le potentiel de celle-ci est alors proportionnel à la tension résiduelle de l'intégrateur d'entrée, le coefficient de proportionnalité étant fixé par le gain G de l'étage suiveur. La seconde armature B de la capacité de liaison $C_l$ est maintenue par l'interrupteur $T_{c2}$ à un potentiel de référence $V_{refS}$.

En choisissant $V_{refS}$ et $V_G$ ( tension de grille du transistor grille commune T) telles que :

$$V_{RefS} \geq V_G - V_T$$

($V_T$ = tension de seuil de T) , le transistor T est maintenu dans un état quasi bloqué, ne laissant circuler qu'un courant négligeable entre son drain et sa source.

Au cours de la seconde phase, après ouverture des interrupteurs $T_{c1}$ et $T_{c2}$, ($\phi = 0$), l'armature A de la capacité de liaison $C_l$ est déchargée progressivement par la source de courant $I_{réf}$. La chute de tension établie durant la première phase entre les armatures de $C_l$ est maintenue jusqu'à l'instant où le potentiel $V_s$ de l'armature B atteint une valeur proche du potentiel de canal du transistor T, soit :

$$V_S \cong V_G - V_T$$

Au delà de cette valeur critique, le transistor T conduit. Un régime de forte inversion s'établit entraînant la charge de l'armature B de la capacité de liaison par le courant de canal $i_{ds}$ du transistor T :

$$i_{ds} = -\frac{\beta}{2}[(V_G - V_T) - V_S]^2$$

où

$\beta = \mu \, C_{ox} \, W/L$ = facteur de gain du transistor T

et

$\mu$ = Mobilité
$C_{ox}$ = Capacité d'oxyde
$W$ = Largeur de grille
$L$ = Longueur de grille.

Simultanément, la capacité d'intégration $C_d$ reliée au drain D du transistor T se décharge sous l'action du courant $_{ids.}$.

Le processus se termine lorsque, le potentiel de l'armature A s'étant stabilisé au potentiel de référence $V_{Ref}$, le potentiel de l'armature B rejoint une valeur légèrement supérieure au potentiel de canal $V_G - V_T$.

En première approximation, la vitesse de décroissance du potentiel de l'armature B est limitée, d'une part par sa capacité, d'autre part par l'aspect géométrique du transistor grille commune. Soit, pour une température de fonctionnement de 77° K, un temps minimum de transfert de

$$t(\mu_S) \geq 2. L/W. \, C_l(pF)$$

Après retour à l'équilibre du potentiel de l'armature B, la variation de potentiel enregistrée sur la capacité de sommation $C_d$ est égale à

$$\Delta V_S = \Delta V_A . \frac{C_l}{C_d}$$

Il a donc été réalisé un transfert de tension entre les points A et D avec une amplification déterminée par le rapport des valeurs de capacité de liaison $C_l$ et de sommation $C_d$.

Un tel dispositif peut être utilisé pour sommer les potentiels résiduels d'un grand nombre de circuits d'injection.

Si l'on considère un circuit d'injection constitué d'une capacité d'intégration $C_e$ préchargée au potentiel $V_{dd}$ et d'un étage de lecture de gain G, le potentiel lisible en fin de période d'intégration est

$$V_A = G.(V_{dd} - \frac{qN_i}{C_e})$$

avec Niq = charge photoélectrique intégrée par le circuit d'injection.

Transféré sur le drain D du sommateur, ce potentiel devient :

$$V_D = V_{dd} - \frac{C_l}{C_d} G \, (V_{dd} - \frac{N_i q}{C_e})$$

Lorsque, à la suite de la lecture de "n" circuits d'injection, supposés identiques, l'opération de transfert de potentiel est répétée "n" fois, le potentiel final du drain D du sommateur est :

$$V_D = V_{dd} - \frac{C_l}{C_d} \sum_1^n (V_{dd} - \frac{N_i q}{C_e}) \, G$$

En choisissant les capacités $C_l$ et $C_d$ telles que :

$$\frac{C_l}{C_d} = \frac{1}{n.G}$$

on obtient une proportionnalité directe entre le flux détecté et la tension résiduelle du noeud de sommation :

$$V_D = \frac{q}{n \, C_e} \sum_1^n Ni$$

Dans un système mettant en oeuvre une matrice de détecteurs associés à un balayage optomécanique, l'association d'un nombre suffisant de sommateurs à chaque voie de détection permet soit de réaliser la fonction d'intégration retardée (TDI), en dédiant à chaque point image analysée une cellule de sommation, soit de faire une cartographie de réponse du plan focal, en attribuant une cellule à chaque élément de détection.

Le changement de mode de fonctionnement est contrôlé par la logique de gestion qui doit permettre de modifier l'ordre d'adressage, en écriture et en lecture, des circuits de sommation.

Pour qu'un tel système fonctionne correctement, il est nécessaire que les instants de lecture des circuits d'injection d'une même voie soient distincts les uns des autres, répartis de manière la plus uniforme possible sur l'espace temporel séparant deux cycles d'intégration. Cette condition peut être satisfaite soit en associant à chaque circuit d'injection une mémoire analogique, soit en choisissant un pas détecteur non multiple du pas pixel.

Ce sommateur peut être réalisé avec la plupart des technologies MOS actuelles et notamment avec les technologies CMOS submicroniques généralement dédiées aux applications numériques.

L'invention est précisée par les revendications suivantes.

## Revendications

1. Sommateur de tensions, pour intégration retardée dans un appareil d'imagerie thermique, comportant au moins deux circuits d'injection qui, pour chaque ligne d'image, fournissent successivement chacun un signal de tension, caractérisé en ce que le sommateur comporte un transistor à effet de champ (T), monté en grille commune, dont la source est réunie à une première capacité de liaison ($C_l$), et dont le drain est réuni à une seconde capacité d'intégration ($C_d$), en ce que la capacité de liaison ($C_l$) a sa première armature (A) connectée en parallèle à une source de courant ($I_{ref}$) et à un premier commutateur ($T_{c1}$) qui l'isole des circuits d'injection, et a sa deuxième armature (B) connectée en parallèle à la source du transistor (T) et à un second commutateur ($T_{c2}$) lui-même réuni à une source de tension de référence ($V_{réfS}$) supérieure à la tension de canal du transistor (T), et en ce que la capacité d'intégration ($C_d$) a sa première armature connectée en parallèle au drain (D) du transistor (T) et à un troisième commutateur ($T_{c3}$) lui-même relié à une source de tension fixe ($V_{dd}$) de précharge.

2. Sommateur de tensions selon la revendication 1, caractérisé en ce que la capacité d'intégration ($C_d$), isolée de la source de tension fixe ($V_{dd}$) de précharge par le troisième commutateur ($T_{c3}$), se décharge à travers le canal du transistor (T) et la capacité de liaison ($C_l$), d'une valeur proportionnelle à la variation de potentiel de la première armature (A) de la capacité de liaison ($C_l$).

3. Sommateur de tensions selon la revendication 2, caractérisé en ce que le point commun entre le drain (D) du transistor (T), le troisième commutateur ($T_{c3}$), et la première armature de la capacité d'intégration ($C_d$) constitue la sortie du sommateur .

4. Sommateur de tensions selon la revendication 1, caractérisé en ce que le transistor (T) est de type MOS.

5. Sommateur de tensions selon l'une quelconque des revendications 2 à 3, caractérisé en ce que la capacité d'intégration ($C_d$) se décharge d'une valeur $\Delta V_D$ proportionnelle à la variation $\Delta V_A$ de potentiel de la première armature (A) de la capacité de liaison ($C_l$) avec un coefficient de proportionnalité ($C_l/C_d$) égal au rapport des capacités de liaison ($C_l$) et d'intégration ($C_d$).

6. Matrice de sommateurs de tensions, pour appareil d'imagerie thermique, comportant une pluralité de sommateurs selon la revendication 1, caractérisé en ce qu'elle est associée à un circuit de multiplexage ($S_1$ - $S_6$) dont la logique de gestion assure un accès aléatoire en entrée et en sortie de chaque sommateur.

## Patentansprüche

1. Spannungsaddierer für die verzögerte Integration in einem Wärmebildgerät, mit wenigstens zwei Injektionsschaltkreisen, die für jede Bildzeile nacheinander jeweils ein Spannungssignal liefern, dadurch gekennzeichnet, daß der Addierer einen in Gate-Schaltung geschalteten Feldeffekttransistor (T) aufweist, dessen Source-Anschluß mit einer ersten Verbindungskapazität ($C_1$) verbunden ist und dessen Drain-Anschluß mit einer zweiten Integrationskapazität ($C_d$) verbunden ist, daß die Verbindungskapazität ($C_1$) mit ihrem ersten Anschluß (A) parallel mit einer Stromquelle ($I_{ref}$) und einem ersten Schalter ($T_{c1}$), der sie von den Injektionsschaltkreisen isoliert, verbunden ist, und mit ihrem zweiten Anschluß (B) parallel mit dem Source-Anschluß des Transistors (T) und mit einem zweiten Schalter ($T_{c2}$) verbunden ist, der selbst an eine Referenzspannungsquelle ($V_{refS}$) mit höherer Spannung als der Kanalspannung des Transistors (T) angeschlossen ist, und daß die Integrationskapazität ($C_d$) mit ihrem ersten Anschluß parallel mit dem Drain-Anschluß (D) des Transistors (T) und mit einem dritten Schalter ($T_{c3}$) verbunden ist, der selbst an eine Vorladungs-Festspannungsquelle ($V_{dd}$) angeschlossen ist.

2. Spannungsaddierer nach Anspruch 1, dadurch gekennzeichnet, daß die von der Vorladungs-Festspannungsquelle ($V_{dd}$) durch den dritten Schalter ($T_{c3}$) isolierte Integrationskapazität ($C_d$) sich über den Kanal des Transistors (T) und die Verbindungskapazität ($C_1$) um einen Wert entlädt, der proportional zu der Potentialveränderung des ersten Anschlusses (A) der Verbindungskapazität ($C_1$) ist.

3. Spannungsaddierer nach Anspruch 2, dadurch gekennzeichnet, daß der gemeinsame Punkt zwischen dem Drain-Anschluß (D) des Transistors (T), dem dritten Schalter ($T_{c3}$) und dem ersten Anschluß der Integrationskapazität ($C_d$) den Ausgang des Addierers bildet.

4. Spannungsaddierer nach Anspruch 1, dadurch gekennzeichnet, daß der Transistor (T) vom MOS-Typ ist.

5. Spannungsaddierer nach einem der Ansprüche 2 bis 3, dadurch gekennzeichnet, daß sich die Integrationskapazität ($C_d$) um einen Wert $\Delta V_D$ entlädt, der proportional zur Potentialveränderung $\Delta V_A$ des ersten Anschlusses (A) der Verbindungskapazität ($C_l$) ist, wobei der Proportionalitätskoeffizient ($C_l/C_d$) gleich dem Verhältnis der Verbindungskapazität ($C_l$) zu der Integrationskapazität ($C_d$) ist.

6. Spannungsaddierermatrix für ein Wärmebildgerät mit mehreren Addierern nach Anspruch 1, dadurch gekennzeichnet, daß sie einer Multiplexschaltung ($S_1$ - $S_6$) zugeordnet ist, deren Steuerungslogik einen wahlfreien Zugriff auf den Eingang und den Ausgang jedes Addierers sicherstellt.

**Claims**

1. Voltage adder, for delayed integration in a thermal imager, including at least two injection circuits which, for each image line, each successively supply a voltage signal, characterized in that the adder includes a field-effect transistor (T), mounted in common-gate mode, the source of which is joined to a first, link capacitor ($C_l$), and the drain of which is joined to a second, integration capacitor ($C_d$), in that the link capacitor ($C_l$) has its first plate (A) connected in parallel to a current source ($I_{ref}$) and to a first switch ($T_{c1}$) which isolates it from the injection circuits, and has its second plate (B) connected in parallel to the source of the transistor (T) and to a second switch ($T_{c2}$) which is itself joined to a reference voltage source ($V_{refS}$) that is higher than the channel voltage of the transistor (T), and in that the integration capacitor ($C_d$) has its first plate connected in parallel to the drain (D) of the transistor (T) and to a third switch ($T_{c3}$) which is itself joined to a fixed precharging voltage source ($V_{dd}$).

2. Voltage adder according to Claim 1, characterized in that the integration capacitor ($C_d$), isolated from the fixed precharging voltage source ($V_{dd}$) by the third switch ($T_{c3}$), discharges through the channel of the transistor (T) and the link capacitor ($C_l$), by a value proportional to the variation in potential of the first plate (A) of the link capacitor ($C_l$).

3. Voltage adder according to Claim 2, characterized in that the common point between the drain (D) of the transistor (T), the third switch ($T_{c3}$) and the first plate of the integration capacitor ($C_d$) constitutes the output of the adder.

4. Voltage adder according to Claim 1, characterized in that the transistor (T) is of the MOS type.

5. Voltage adder according to any one of Claims 2 to 3, characterized in that the integration capacitor ($C_d$) discharges by a value $\Delta V_D$ proportional to the variation $\Delta V_A$ in potential of the first plate (A) of the link capacitor ($C_l$) with a proportionality coefficient ($C_l/C_d$) equal to the ratio of the link ($C_l$) and integration ($C_d$) capacitances.

6. Voltage adder matrix for a thermal imager, including a plurality of adders according to Claim 1, characterized in that it is associated with a multiplexing circuit ($S_1$-$S_6$) whose management logic provides random input and output access to each adder.

FIG.1

FIG.2

FIG.3